# EUROPEAN PATENT APPLICATION

(11) **EP 4 455 980 A1**
(43) Date of publication of application: **30.10.2024**
(21) Application number: 22911094.5
(22) Date of filing: 15.12.2022
(51) Int. Cl.: G06Q 50/10, G06Q 50/30

(54) **MANAGEMENT DEVICE, USER TERMINAL, MANAGEMENT METHOD, AND COMMUNICATION METHOD**

(30) Priority: 21.12.2021 JP 2021207274
(71) Applicant: Panasonic Intellectual Property Management Co., Ltd., Kadoma-shi, Osaka 571-0057 (JP)
(72) Inventor: TOYOKITA, Yukihiro, Kadoma-shi, Osaka 571-8501 (JP); TASAKI, Nobuaki, Kadoma-shi, Osaka 571-8501 (JP); INO, Tomoaki, Kadoma-shi, Osaka 571-8501 (JP); MORI, Toshihiko, Kadoma-shi, Osaka 571-8501 (JP)
(74) Representative: Eisenführ Speiser
(86) International application number: PCT/JP2022/046278
(87) International publication number: WO 2023/120386

(57) **Abstract**

A management device according to the present disclosure communicates with, via a network, each of a plurality of vehicles with which a user moves among a plurality of ports and a user terminal used by the user. In each of the plurality of vehicles, a unique character having a plurality of display modes is set. The management device includes an acquisition unit, an analysis unit, and a display management unit. The analysis unit analyzes a degree of bias in arrangement regarding the plurality of vehicles among the plurality of ports, based on position information indicating a position of each of the plurality of vehicles acquired by the acquisition unit. The display management unit determines a display mode of a character set in any of the plurality of vehicles depending on the magnitude of the degree of bias.

## Description

### TECHNICAL FIELD

The present disclosure relates to a management device, a user terminal, a management method, and a communication method.

### BACKGROUND ART

Conventionally, there are known vehicle sharing services for sharing vehicles such as bicycles among a plurality of users. For example, a user selects a vehicle that the user desires use from vehicles arranged in a service station and performs a procedure of renting the selected vehicle.

### CITATION LIST

### Patent Literatures

Patent Document 1: JP 2018-073006 A
Patent Document 2: JP 2018-063469 A

### SUMMARY OF INVENTION

However, for example, in a vehicle sharing service in which a vehicle can be returned to a renting base different from a renting base of renting the vehicle, a bias may occur in the distribution of vehicles in a plurality of renting bases depending on the use status. For this reason, an administrator needs to rearrange the vehicles to average the distribution of the vehicles in the plurality of renting bases by moving the vehicles, and the rearrangement cost may curb the operation revenue.

A problem to be solved by the present disclosure is to promote cooperation of users for vehicle sharing services.

A management device according to the present disclosure communicates with, via a network, each of a plurality of vehicles in each of which a unique character having a plurality of display modes is set, and a user terminal used by a user in a system that provides a vehicle sharing service in which the plurality of vehicles are moved among a plurality of ports by being used by the user. The management device includes an acquisition unit, an analysis unit, and a display management unit. The acquisition unit acquires position information indicating a position of each of the plurality of vehicles. The analysis unit analyzes a degree of bias in arrangement regarding the plurality of vehicles among the plurality of ports, based on the position information of the plurality of vehicles. The display management unit determines a display mode of the character set in any of the plurality of vehicles depending on a magnitude of the degree of bias.

### BRIEF DESCRIPTION OF DRAWINGS

FIG. 1 is a block diagram illustrating an example of a configuration of a vehicle sharing system according to an embodiment;
FIG. 2 is a block diagram illustrating an example of a hardware configuration of each device included in the vehicle sharing system according to the embodiment;
FIG. 3 is a table illustrating an example of a relationship between input and output in state determination processing according to the embodiment;
FIG. 4 is a table illustrating an example of a relationship between input and output in degree-of-intimacy determination processing according to the embodiment;
FIG. 5 is a diagram illustrating an example of a display screen of the embodiment;
FIG. 6 is a diagram illustrating another example of the display screen of the embodiment;
FIG. 7 is a diagram illustrating another example of the display screen of the embodiment;
FIG. 8 is a flowchart illustrating an example of state determination processing executed by a management device of the embodiment;
FIG. 9 is a flowchart illustrating an example of degree-of-intimacy determination processing executed by the management device of the embodiment;
FIG. 10 is a diagram illustrating another example of the display screen of the embodiment;
FIG. 11 is a diagram illustrating another example of the display screen of the embodiment; and
FIG. 12 is a diagram illustrating an example of a configuration of a vehicle sharing system that provides a vehicle sharing service via an application programming interface (API) according to the embodiment.

### DESCRIPTION OF EMBODIMENTS

Hereinafter, embodiments of a management device, a user terminal, a management method, and a communication method according to the present disclosure will be described with reference to the drawings.

Note that, in the description of the present disclosure, components having the same or substantially the same functions as those described above with respect to previously described drawings are denoted by the same reference numerals, and description thereof may be omitted as appropriate. In addition, even in a case of representing the same or substantially the same portion, dimensions or ratios may be represented differently from each other depending on drawings. Furthermore, for example, from the viewpoint of ensuring visibility of drawings, in the description of each drawing, only major components are denoted by reference numerals, and even components having the same or substantially the same functions as those described above in previous drawings may not be denoted by reference numerals.

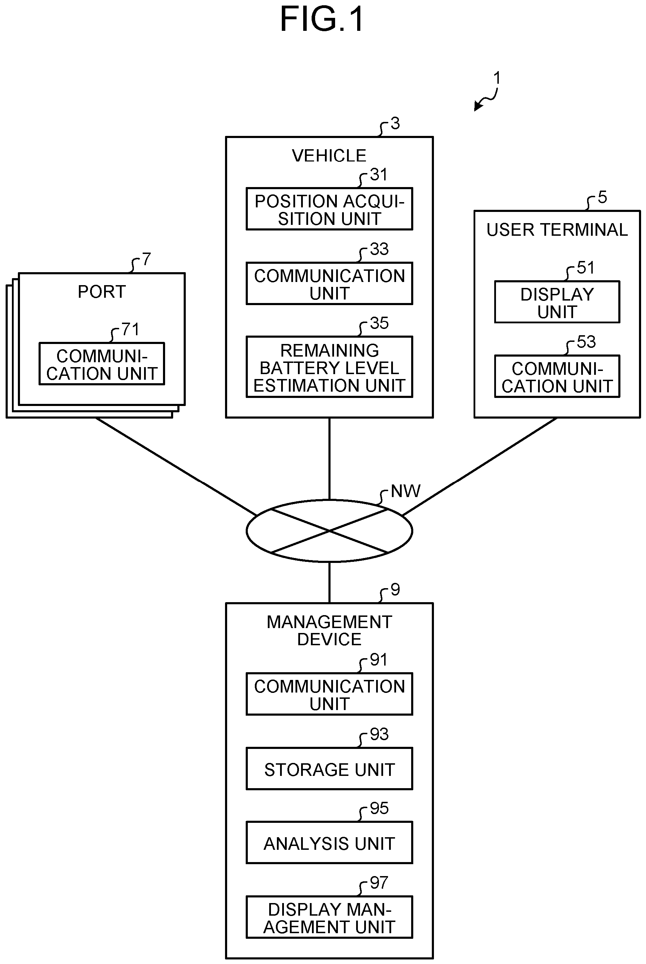

FIG. 1 is a block diagram illustrating an example of a configuration of a vehicle sharing system 1 according to an embodiment. As illustrated in FIG. 1, the vehicle sharing system 1 includes a vehicle 3, a user terminal 5, ports 7, and a management device 9. The vehicle 3, the user terminal 5, the ports 7, and the management device 9 are communicably connected via a network NW. Incidentally, the management device 9 is an example of an information processing device. Furthermore, the user terminal 5 is an example of a display terminal.

The vehicle sharing system 1 according to the embodiment is a system that provides a vehicle sharing service in which a plurality of vehicles 3 are moved between a plurality of ports 7 by being used by a plurality of users who are registered in advance. In other words, the vehicle sharing system 1 of the embodiment is a management system that manages a vehicle sharing service that enables a plurality of users to share and to use the vehicles 3. The vehicle sharing service is, for example, a service in which the plurality of users can use the vehicles 3 stored in predetermined places (ports 7) such as bicycle-parking spaces or parking spaces. Note that the vehicle sharing service may be, for example, a service that enables a plurality of users to use the vehicles 3 by delivering and receiving a vehicle 3 between users.

In the present embodiment, the vehicle 3 is exemplified by an electric bicycle; however, the present invention is not limited thereto. The vehicle 3 is not limited to an electric bicycle and includes various vehicles driven using a mounted battery such as an electric kick scooter, an electric wheelchair, an automobile, and a motorcycle. Note that the technique according to the present disclosure is not limited to vehicles and can also be applied to various traveling bodies using a battery, such as a ship and an aircraft. That is, the vehicle 3 can be expressed as an example of a traveling body.

As an example, the vehicle sharing system 1 can be configured as a server-client type system including the management device 9 as a server device and the user terminal 5 as a client device. The user terminal 5 and the management device 9 are communicably connected via a telecommunication line (network NW) such as the Internet. As the user terminal 5, a smartphone, a personal computer (PC), a tablet PC, a car navigation system, or the like can be used as appropriate. As the management device 9, a server device, a PC, or the like can be used as appropriate.

As an example, the vehicle sharing system 1 can be configured as a server-client type system including the management device 9 as a server device and a computer mounted on the vehicle 3 as a client device. Hereinafter, the computer mounted on the vehicle 3 will be referred to as an on-vehicle device. The on-vehicle device of the vehicle 3 and the management device 9 are communicably connected via the telecommunication line (network NW) such as a dedicated line or the Internet. The on-vehicle device is not limited to a dedicated computer such as a computer used for controlling the vehicle 3, and a smartphone or the like may be used.

Note that although one vehicle 3 is illustrated in FIG. 1, the vehicle sharing system 1 includes two or more vehicles 3. In addition, although one user terminal 5 is illustrated in FIG. 1, the vehicle sharing system 1 includes two or more user terminals 5. Likewise, although three ports 7 are illustrated in FIG. 1, the vehicle sharing system 1 may include two or four or more ports 7.

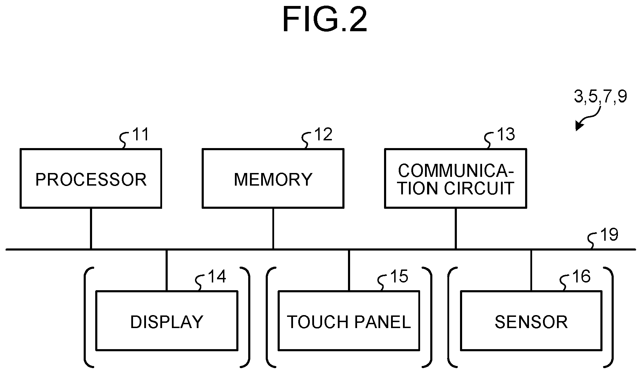

FIG. 2 is a block diagram illustrating an example of a hardware configuration of each device included in the vehicle sharing system 1 according to the embodiment.

For example, each of the on-vehicle device of the vehicle 3, the user terminal 5, the ports 7, and the management device 9 includes a processor 11, a memory 12, and a communication circuit 13. The processor 11, the memory 12, and the communication circuit 13 are communicably connected to each other via a bus 19.

The processor 11 controls the overall operation of each device (on-vehicle device of the vehicle 3, the user terminal 5, the ports 7, and the management device 9) of the vehicle sharing system 1. The processor 11 implements each function of each device by executing a program loaded in a RAM of the memory 12.

As the processor 11, various processors such as a central processing unit (CPU), a graphics processing unit (GPU), an application specific integrated circuit (ASIC), and a field programmable gate array (FPGA) can be used as appropriate.

The memory 12 stores various types of data or programs used by each device of the vehicle sharing system 1. As the memory 12, various storage media or storage devices such as a read only memory (ROM), a hard disk drive (HDD), a solid state drive (SSD), and a flash memory can be used as appropriate. Furthermore, the memory 12 is further provided with a random access memory (RAM) that temporarily stores data under work.

The communication circuit 13 is a circuit for communicating with the outside via a network. As the communication circuit 13, a communication circuit for wired communication, a communication circuit for wireless communication, and a combination thereof can be used as appropriate. As the communication circuit for wireless communication, a communication circuit compatible with various standards such as 3G, 4G, 5G, Wi-Fi (registered trademark), or Bluetooth (registered trademark) can be used as appropriate.

For example, the user terminal 5 further includes a display 14 and a touch panel 15. Each of the display 14 and the touch panel 15 is connected to the processor 11 and others via a bus 19. Note that the on-vehicle device of the vehicle 3, the ports 7, and/or the management device 9 may further include a display 14 and a touch panel 15.

The display 14 presents a display screen to a user. As the display 14, a liquid crystal display, an organic EL display, a projector, or the like can be used as appropriate. The touch panel 15 accepts input by a user. The touch panel 15 is provided on a surface of the display 14, for example, and outputs information corresponding to a position that is touched.

Note that each device of the vehicle sharing system 1 may have another input device such as a keyboard without being limited to the touch panel 15. In addition, each device of the vehicle sharing system 1 may further include a microphone that receives a user's voice input, a speaker that outputs a voice corresponding to voice data, or the like. In these cases, in the vehicle sharing system 1, user information may be registered by voice, and the state of a facial expression, an emotion, or the degree of intimacy of a character or a message may be presented to the user by voice.

For example, the vehicle 3 further includes a sensor 16. The sensor 16 is connected to a processor 11 and others of the on-vehicle device of the vehicle 3 via the bus 19. As the sensor 16, for example, a GPS sensor that acquires position information of the vehicle 3, a sensor that measures the rotation speed of the wheels of the vehicle 3, a sensor that measures the outdoor temperature, or the like can be used.

Note that, in the vehicle sharing system 1, the management device 9 may be capable of accessing a database that stores registered user information via a computer-readable recording medium or a portable external storage device. As the computer-readable recording medium, for example, a CD-ROM, a flexible disk (FD), a CD-R, a digital versatile disk (DVD), or the like can be used as appropriate. In addition, as the portable external storage device, an HDD, an SSD, a flash memory, or the like can be used as appropriate.

Note that, in the vehicle sharing system 1, the management device 9 may be configured by a combination of a plurality of devices. That is, management processing of the embodiment may be implemented by distributed processing by the plurality of devices.

Incidentally, functions of each device of the vehicle sharing system 1 will be described with reference to FIG. 1 again.

In the on-vehicle device of the vehicle 3, the processor 11 executes a program loaded in the RAM of the memory 12 and thereby implements functions as a position acquisition unit 31, a communication unit 32, and a remaining battery level estimation unit 35.

In the position acquisition unit 31, the processor 11 of the on-vehicle device of the vehicle 3 acquires position information indicating the current position of the vehicle 3 on the basis of, for example, output of a GPS sensor, a sensor that measures the rotation speed of wheels, or the like as the sensor 16. In addition, the processor 11 accumulates, for example, position information in the memory 12 and acquires travel data regarding a travel history of the vehicle 3 such as a travel route or a travel distance.

In the communication unit 32, the processor 11 of the on-vehicle device of the vehicle 3 transmits the position information and the information of the remaining battery level as vehicle information to the management device 9 through the communication circuit 13.

In the remaining battery level estimation unit 35, the processor 11 of the on-vehicle device of the vehicle 3 acquires battery data related to the use state of the battery mounted on the vehicle 3. For example, the battery data includes at least one piece of information such as a battery capacity, a time series of input and output current values with respect to the battery, a battery remaining amount such as states of charge (SOC) for each battery cell or a battery deterioration amount, a battery consumption amount, a charging amount, a charging time, the number of times of charging and discharging, and a temperature at the time of charging. The processor 11 estimates the remaining battery level indicating the remaining battery level of the vehicle 3 using the acquired battery data.

Note that, in the remaining battery level estimation unit 35, the processor 11 of the on-vehicle device of the vehicle 3 may acquire use environment data regarding the environment in which the vehicle 3 has been used such as the outdoor temperature on the basis of output of the temperature sensor or the like as the sensor 16, for example. In this case, the processor 11 estimates the remaining battery level by further using the use environment data.

Note that, in the remaining battery level estimation unit 35, the processor 11 of the on-vehicle device of the vehicle 3 may acquire information such as the charging time or the charging amount of the vehicle 3, the charging time, or the temperature at the time of charging from the ports 7, for example.

In the user terminal 5, the processor 11 implements the functions of a display unit 51 and a communication unit 52 by executing a program loaded in the RAM of the memory 12.

In the display unit 51, the processor 11 displays an input screen of user information, a notification screen for displaying message information from the management device 9, and others.

Incidentally, the message information is information prompting a user to cooperate in rearrangement for moving a vehicle 3, which is not in use, to another port, for example, in a case where the degree of bias of vehicles 3 among the ports 7 is larger than a predetermined threshold value. Alternatively, the message information is information prompting a user to cooperate in recharging the battery, for example, in a case where the remaining battery level of a battery mounted on a vehicle 3 that is not in use is smaller than a predetermined threshold value. Alternatively, the message information is information prompting the user to cooperate in rearrangement of moving a concerned vehicle 3 to any port 7, for example, in a case where the vehicle 3 is not arranged at any port 7, that is, the vehicle 3 is abandoned. For example, a system administrator can set a priority in the management device 9 such that the message information regarding at least one of rearrangement or charging of the vehicle 3 is generated.

In the communication unit 52, the processor 11 transmits user information that has been received to the management device 9 through the communication circuit 13. Furthermore, the processor 11 receives the message information from the management device 9 through the communication circuit 13.

In the ports 7, the processor 11 implements the function of a communication unit 71 by executing a program loaded in the RAM of the memory 12.

In the communication unit 71, the processor 11 senses the vehicle 3 using, for example, a Bluetooth (registered trademark) beacon and notifies the management device 9 of arrangement information indicating the vehicle 3 arranged at the port.

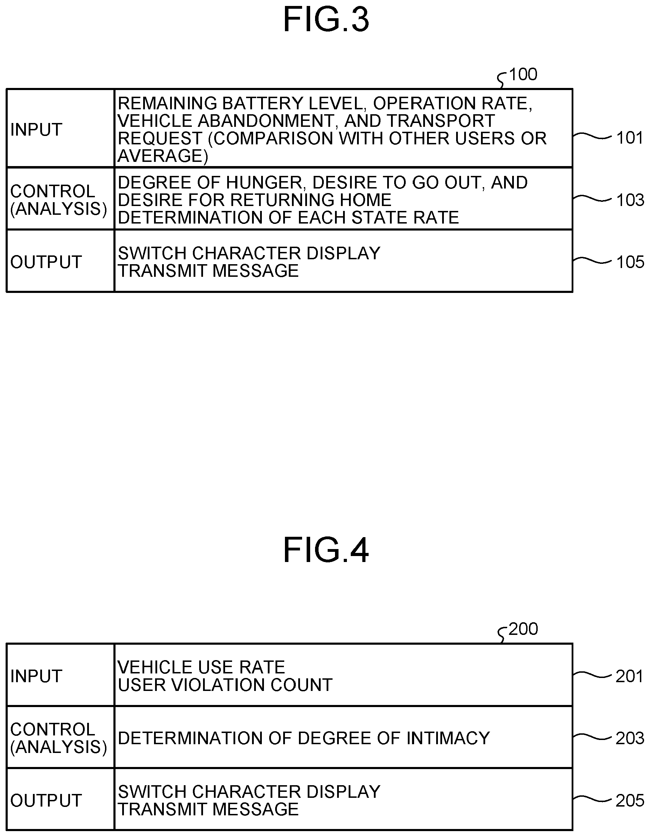

FIG. 3 is a table illustrating an example of a relationship 100 between input and output in state determination processing according to the embodiment. FIG. 4 is a table illustrating an example of a relationship 200 between input and output in degree-of-intimacy determination processing according to the embodiment. In the state determination processing or the degree-of-intimacy determination processing, the management device 9 determines a character state depending on input of information regarding the state of the vehicle 3 or the user and outputs message information corresponding to a determined parameter.

In the state determination processing, the management device 9 determines the state rate of the vehicle 3 depending on input 101 of information regarding the state of the vehicle 3, thereby determines a character state 103 corresponding to each state rate, and outputs message information 105 for displaying the character in the character state 103 that has been determined.

In the degree-of-intimacy determination processing, the management device 9 determines the degree of intimacy (character state 203) depending on the input 201 of the information regarding the state of the user and outputs message information 205 for displaying the character in the character state 203 depending on the degree of intimacy that has been determined.

In the management device 9, the processor 11 executes a program loaded in the RAM of the memory 12 and thereby implements functions as a communication unit 91, a storage unit 93, an analysis unit 95, and a display management unit 97.

In the communication unit 91, the processor 11 receives use registration information, a renting request of the vehicle 3, and others from the user terminal 5 through the communication circuit 13. The processor 11 also receives arrangement information from the ports 7 through the communication circuit 13. In addition, the processor 11 receives vehicle information from the vehicle 3. Furthermore, the processor 11 transmits message information to the user terminal 5. Incidentally, the communication unit 91 that receives the vehicle information from the vehicle 3 is an example of an acquisition unit.

In the storage unit 93, the processor 11 stores the use registration information, the arrangement information, the vehicle information, and others received by the communication circuit 13 in the memory 12. In addition, the processor 11 stores status information or data of an analysis result generated by the analysis unit 95 in the memory 12. The processor 11 also stores character information for each vehicle 3 used by the display management unit 97 in the memory 12.

In the analysis unit 95, the processor 11 generates status information indicating whether or not the vehicle 3 is in use. For example, the processor 11 generates status information indicating that the vehicle 3 is in use until an end notification for notifying the end of use is received from the user terminal 5 by the communication circuit 13 regarding the vehicle 3 for which a renting permission notification has been issued in response to a use request for requesting use of the vehicle 3 from the user terminal 5. The generated status information is stored in the memory 12 by the storage unit 93.

In the analysis unit 95, the processor 11 reads and acquires the position information, the remaining battery level, and the status information of the vehicle 3 from the memory 12 by the storage unit 93. Incidentally, the analysis unit 95 that acquires the position information, the remaining battery level, and the status information of the vehicle 3 is an example of the acquisition unit. The processor 11 calculates the degree of bias of arrangement regarding vehicles 3 that are not in use among the plurality of vehicles 3, among the plurality of ports 7 on the basis of the position information and the status information of the vehicles 3. The processor 11 calculates the operation rates of the plurality of vehicles 3 on the basis of the status information. The processor 11 calculates each state rate of the vehicles 3 such as the degree of bias, the operation rate, and the remaining battery level.

In the vehicle sharing system 1 according to the present embodiment, a unique character is set for each of the plurality of vehicles 3. Each character has a plurality of display modes corresponding to character states. A character state is, for example, a state of a character calculated depending on a state rate of a vehicle 3.

In the analysis unit 95, the processor 11 calculates, for example, at least one of the degree of hunger, the degree of desire to go out, and the degree of desire for returning home (degree of desire to go home) as a character state depending on the state rate of the vehicle 3. Incidentally, the degree of hunger is a character state corresponding to the remaining battery level of the vehicle 3 and is calculated to be larger as the remaining battery level is smaller. The degree of desire to go out is a character state corresponding to the operation rate of the vehicle 3 and is calculated to be larger as the operation rate is smaller. The degree of desire for returning home is a character state corresponding to the degree of bias of the vehicles 3 and is calculated to be larger as the degree of bias is larger.

Note that there may be a case where it is desired to move the vehicles 3 in advance in preparation for a time of the day during which use of the vehicle sharing service increases. Therefore, in the analysis unit 95, the processor 11 can also calculate the degree of desire for returning home to be larger as the degree of bias of the vehicles 3 is predicted to be larger.

Note that, in the analysis unit 95, the processor 11 may calculate the degree of desire to go out depending on the deterioration degree of the battery of the vehicle 3. For example, in the remaining battery level estimation unit 35, the processor 11 of the on-vehicle device of the vehicle 3 calculates the deterioration degree of the battery of the vehicle 3 on the basis of the vehicle data from the on-vehicle device of the vehicle 3 such as the SOC for each battery cell, input and output current values with respect to the battery, and the outdoor temperature. For example, there is a request from the management side of the vehicle sharing service to prioritize the use of a vehicle 3 in which the battery is not deteriorated in order to equalize the deterioration degree of the batteries and to suppress the progress of deterioration of a battery only in some vehicles 3 or an increase in the maintenance frequency only in some vehicles 3. Therefore, in the analysis unit 95, the processor 11 may be configured to calculate the degree of desire to go out to be higher as the deterioration degree of the battery is smaller. Alternatively, since there is a risk that battery replacement may occur in a large number of vehicles 3 due to the leveling of the battery deterioration amounts, there is a request on the management side of the vehicle sharing service to give priority to use of a vehicle 3 of which battery is not deteriorated. Therefore, in the analysis unit 95, the processor 11 may be configured to calculate the degree of desire to go out to be higher as the deterioration degree of the battery is larger.

Note that, in the analysis unit 95, the processor 11 can also calculate the degree of desire to go out to be larger as the operation rate of a vehicle 3 is higher in order to adjust the timing of maintenance of the vehicle 3 without being limited to the timing of battery replacement.

Note that, in the analysis unit 95, the processor 11 calculates a vehicle use rate of the vehicle 3 for each user on the basis of the history of the status information and the use registration information. The processor 11 detects vehicle abandonment on the basis of the position information and the status information of the vehicle 3. The processor 11 detects a violation in which the user abandons the vehicle 3 at a point other than those in predetermined routes among the plurality of ports 7 and calculates a violation rate for each user. The processor 11 calculates the degree of intimacy with the user of the vehicle 3 on the basis of the use record such as a use count of the vehicle 3 by the user, the vehicle use rate (use level), or the violation rate (use manner level). The degree of intimacy is calculated to be larger as the use count or the vehicle use rate is larger. In addition, the degree of intimacy is calculated to be larger as the violation rate is smaller.

Note that the degree of intimacy of the vehicle 3 with the user is also an example of the character state. That is, the character state is at least one of the state of the character calculated depending on the state rate of the vehicle 3 or the degree of intimacy with the user.

Note that the degree of desire for returning home is calculated to be large when the vehicle 3 is in a state of being abandoned at another place other than the ports 7 as in the case where the degree of bias is large.

In the display management unit 97, the processor 11 generates message information for prompting cooperation in rearrangement for moving a vehicle 3 that is not in use to another port on the basis of the data of the analysis result by the analysis unit 95 and transmits the message information to the user terminal 5. The message information is information for displaying the character in a display mode corresponding to the character state on the user terminal 5. That is, the processor 11 switches the display mode in the user terminal 5 depending on the character state.

In addition, in the display management unit 97, the processor 11 determines a user terminal 5 to which the message information is transmitted on the basis of setting of the priority by the system administrator, the data of the analysis result by the analysis unit 95, the use registration information, or others. This makes it possible to reduce the possibility that the message information is ignored and to facilitate a request for rearrangement or charging to be satisfied. It is also possible to reduce the risk of impairing the user's feeling by sending too much message information.

As an example, in the display management unit 97, the processor 11 determines, as a transmission destination of the message information, a user terminal 5 within a certain area from the current position of the vehicle 3 or a port 7 where the concerned vehicle 3 is disposed on the basis of the position information of the user terminal 5. The position information of the user terminal 5 is acquired by, for example, a GPS sensor mounted on the user terminal 5 or sensing of the user terminal 5 by a beacon provided in the port 7 and/or the vehicle 3.

As an example, in the display management unit 97, the processor 11 determines the user terminal 5 in a state in which an application of the vehicle sharing service is activated as the transmission destination of the message information. Specifically, the processor 11 collects traveling vectors of users on the basis of the history of the position information or the like of user terminals 5 and determines a user terminal 5 moving towards the concerned vehicle 3 as the transmission destination of the message information. Alternatively, the processor 11 determines a user terminal 5 within a certain distance (for example, 100 m) from the concerned vehicle 3 as the transmission destination of the message information on the basis of the position information of the user terminals 5. That is, from the user's viewpoint, when the application of the vehicle sharing service is activated, the user terminal 5 is notified of the message information regarding a vehicle 3 ahead in the traveling direction or a vehicle 3 close to the user at that time.

As an example, in the display management unit 97, the processor 11 narrows down user terminals 5 having been determined as the transmission destination of the message information in the above manners on the basis of the position information depending on, for example, the degree of intimacy. In other words, the processor 11 determines a user terminal 5 to display the message information on the basis of the use record of the vehicle 3 by the user.

Incidentally, the message information corresponding to the display mode of the character according to the embodiment is an example of character display information. That is, the character display information according to the present disclosure is information including a display mode of a character to be displayed on a user terminal 5 among the message information generated by the management device 9. Note that the display mode in the user terminal 5 implemented by transmission of the message information from the display management unit 97 of the management device 9 to the user terminal 5 is not limited to the case of using a character and may be another mode such as text information other than a character. For example, it may be a mode of displaying a comment displayed in a speech balloon of a character as described below or a mode of displaying a numerical value or an icon indicating the importance level and information of an incentive to be obtained in a case of handling the situation.

In the vehicle sharing service according to the present embodiment, each character is personified, and a plurality of display modes is implemented by making at least one of the facial expression, the emotion, or a comment using a speech balloon different. Specifically, in the display management unit 97, the processor 11 determines at least one of the facial expression, the emotion, or a comment using a speech balloon of the character depending on the character state.

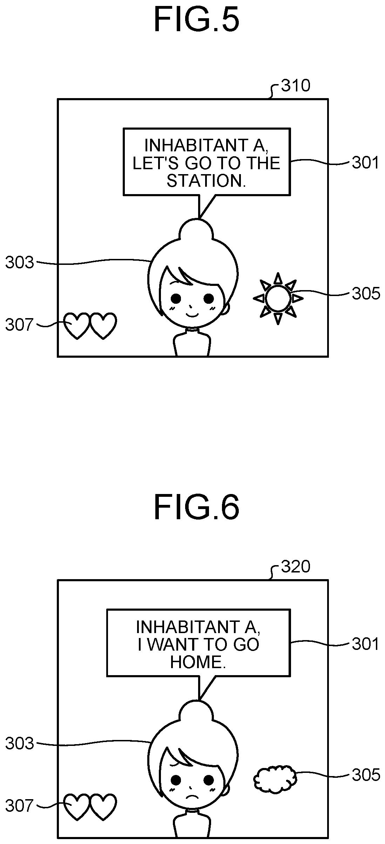

FIG. 5 is a diagram illustrating an example of a display screen 310 of the embodiment. The display screen 310 includes display of a comment 301, a facial expression 303, an emotion 305, and a degree of intimacy 307. The display screen 310 relates to, for example, a vehicle 3 whose degree of desire to go out is larger than a predetermined threshold value. The display screen 310 includes content prompting use of the vehicle 3 by the comment 301 of "Inhabitant A, let's go to the station.", the facial expression 303 of "smile", and the emotion 305 of "sunny".

In the degree of intimacy 307, for example, a larger number of heart shapes are displayed as the degree of intimacy with the user is higher. As a result, it is possible to transmit a message such as violation prevention to the user depending on the violation count by the user. Note that the degree of intimacy 307 may be displayed by the facial expression 303.

FIG. 6 is a diagram illustrating an example of a display screen 320 of the embodiment. The display screen 320 includes display of the comment 301, the facial expression 303, the emotion 305, and the degree of intimacy 307. The display screen 320 relates to, for example, a vehicle 3 whose degree of desire for returning home is larger than a predetermined first threshold value. The display screen 320 includes content prompting rearrangement of the vehicle 3 by the comment 301 of "Inhabitant A, I want to go home.", the facial expression 303 of "troubled face", and the emotion 305 of "cloudy".

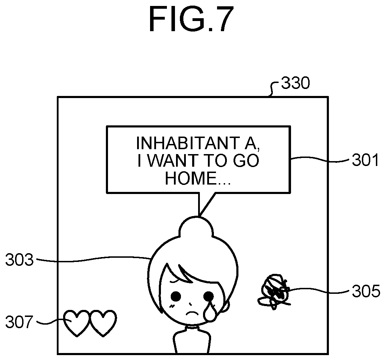

FIG. 7 is a diagram illustrating an example of a display screen 330 of the embodiment. The display screen 330 includes display of the comment 301, the facial expression 303, the emotion 305, and the degree of intimacy 307. The display screen 330 relates to, for example, a vehicle 3 whose degree of desire for returning home is larger than a predetermined second threshold value. Incidentally, it is based on the premise that the second threshold value is larger than the first threshold value. Alternatively, the display screen 330 relates to, for example, a vehicle 3 having high importance of rearrangement, such as a vehicle 3 that has been abandoned at a point other than the ports 7.

That is, the display screen 330 of FIG. 7 is displayed when the degree of bias is larger than that of the case of the display screen 320 in FIG. 6 or when there is an abandoned vehicle 3. On the display screen 330, together with the comment 301 prompting rearrangement of the vehicle 3 such as "Inhabitant A, I want to go home ...", the facial expression 303 is changed from "troubled face" to "weeping face", and the emotion 305 is further changed from "cloudy" to an expression matched to the weeping face as compared with the character on the display screen 320 in FIG. 6 as the degree of bias increases or with the presence of the abandoned vehicle 3.

Note that the display mode of the character may be switched from the display screen 310 in FIG. 5 to the display screen 330 in FIG. 7 not only with regards to the degree of desire for returning home but also in a case where the degree of desire to go out is further small.

Note that the display mode of the character determined depending on the degree of hunger is similar to the display screens illustrated in FIGS. 6 and 7, for example. For example, a display screen 320 related to a vehicle 3 whose degree of hunger is larger than a predetermined third threshold value has content prompting charging of the vehicle 3 by a comment 301 of "Hey everyone, I'm hungry.", a facial expression 303 of "troubled face", and an emotion 305 of "cloudy". As an example, on a display screen 330 related to a vehicle 3 whose degree of hunger is larger than a predetermined fourth threshold value, together with a comment 301 of "Hey everyone, I'm starving and can't move.", the facial expression 303 is changed from "troubled face" to "weeping face", and the emotion 305 is further changed from "cloudy" to an expression matched to the weeping face as compared with the character on the display screen 320 in FIG. 6 as the degree of hunger increases. Incidentally, it is based on the premise that the fourth threshold value is larger than the third threshold value.

Note that a port 7 may not be provided with a charging facility for the vehicle 3. For this reason, in the message information prompting charging, it may be notified to move the vehicle 3 to a place with a charging facility. In addition, in a case where a battery for replacement for the vehicle 3 is disposed in a port 7, it may be notified to replace the battery of the vehicle 3. Alternatively, in a case where the vehicle 3 can be charged by a mobile battery, it may be notified to bring a mobile battery for charging the vehicle 3.

Hereinafter, an operation of the vehicle sharing system 1 according to the embodiment will be described with reference to the drawings. Note that the flow of processing described below is an example, and it is also possible to change the processing order, to delete some part of the processing, or to add other processing.

In the vehicle sharing system 1, server client processing, which is implemented by server-side processing executed by the management device 9 and client-side processing executed by the user terminal 5, is executed.

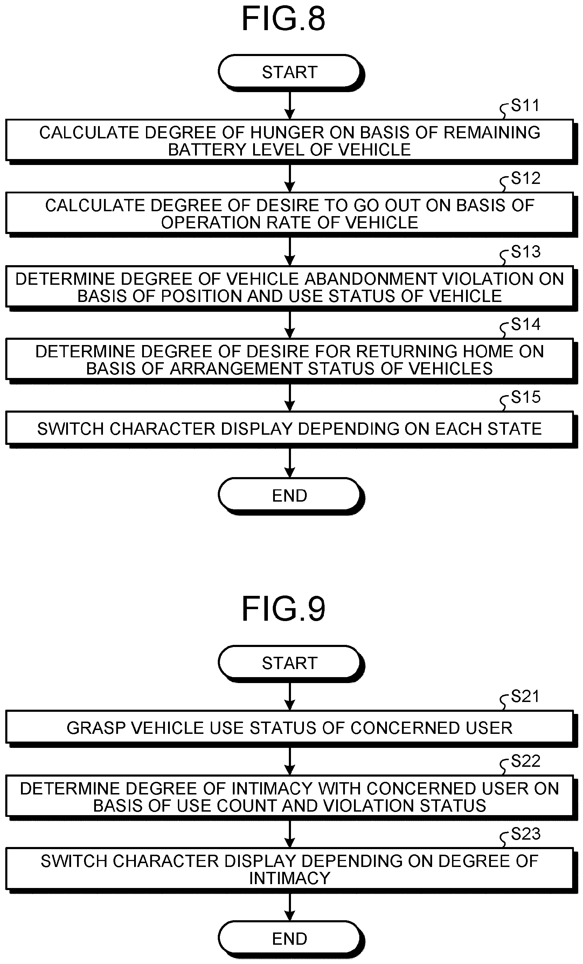

FIG. 8 is a flowchart illustrating an example of state determination processing executed by the management device of the embodiment. In the analysis unit 95, the processor 11 calculates how much the character is hungry, namely, the degree of hunger on the basis of the remaining battery level of the vehicle (S11). In the analysis unit 95, the processor 11 calculates how much the character wants to go out, namely, the degree of desire to go out on the basis of the operation rate of the vehicle (S12). In the analysis unit 95, the processor 11 determines the degree of vehicle abandonment violation on the basis of the position and the use status of the vehicle, namely, the status information (S13). In the analysis unit 95, the processor 11 determines how much the character wants to go home, namely, the degree of desire for returning home on the basis of the arrangement status of vehicles such as the degree of bias or the presence or absence of an abandoned vehicle (S14). Then, in the display management unit 97, the processor 11 switches the character display depending on at least one state of the degree of hunger, the degree of desire to go out, or the degree of desire for returning home (S15). As described above, in the display management unit 97, the processor 11 determines the display mode of the character depending on each state such as the degree of bias in arrangement related to vehicles 3 that are not in use.

FIG. 9 is a flowchart illustrating an example of degree-of-intimacy determination processing executed by the management device of the embodiment. In the analysis unit 95, the processor 11 grasps the vehicle use status of a concerned user (S21). Specifically, in the analysis unit 95, the processor 11 grasps, as a vehicle use status of the concerned user, information such as a monthly average use count, a previous month use count, a concerned vehicle use count, a monthly average violation count, a previous month violation count, and a concerned vehicle violation count. In the analysis unit 95, the processor 11 determines the degree of intimacy with the user on the basis of, for example, the use count and the violation status (S22). Then, in the display management unit 97, the processor 11 switches the character display depending on the degree of intimacy (S23). As described above, in the display management unit 97, the processor 11 determines the display mode of the character depending on the degree of intimacy related to a vehicle 3 that is not in use.

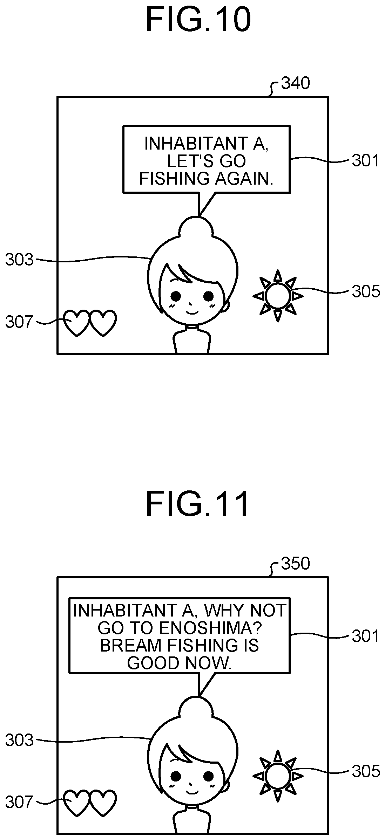

Note that the display mode of the character may be determined depending on the use tendency of the user as a display target. In the display management unit 97, the processor 11 generates the message information on the basis of the use count of the vehicle 3 by the user, the vehicle use rate (use level), the use time of the day, the user information that is registered, and the like. FIG. 10 is a diagram illustrating an example of a display screen 340 of the embodiment. The display screen 340 includes display of the comment 301, the facial expression 303, the emotion 305, and the degree of intimacy 307. The display screen 340 relates to, for example, a vehicle 3 whose degree of desire to go out is larger than a predetermined threshold value. The display screen 340 includes content prompting use of the vehicle 3 by the comment 301 of "Inhabitant A, let's go fishing again.", the facial expression 303 of "smile", and the emotion 305 of "sunny".

Note that the display mode of the character may be determined depending on the travel experience of the user as the display target. In the display management unit 97, the processor 11 generates the message information on the basis of position information at the time of a past use of the vehicle 3 by the user, a use history of ports 7 and the like having been used, user information that is registered, and others. FIG. 11 is a diagram illustrating an example of a display screen 350 of the embodiment. The display screen 350 includes display of the comment 301, the facial expression 303, the emotion 305, and the degree of intimacy 307. The display screen 350 relates to, for example, a vehicle 3 whose degree of desire to go out is larger than a predetermined threshold value. The display screen 350 includes content prompting use of the vehicle 3 by the comment 301 of "Inhabitant A, why not go to Enoshima? Bream fishing is good now.", the facial expression 303 of "smile", and the emotion 305 of "sunny".

For example, in the display management unit 97, the processor 11 can obtain the information of "the sea bream gets hooked" by using web search. As an example, the processor 11 extracts "Enoshima" as a destination on the basis of position information at the time of past use of the user as the display target and a use history of ports 7 and the like having been used. It is further based on the premise that, in the user information of the user, "fishing" is registered as information regarding the purpose of use of the vehicle sharing service or hobbies. In this case, the processor 11 can obtain information as to whether or not the sea bream is currently hooked by searching the web information on the cloud on the basis of "Enoshima" as the destination and "fishing" as the purpose. In addition, the processor 11 may periodically obtain information regarding fishing results in the neighborhood and manage the information in association with the vehicle 3 as content of message transmission.

Note that the display mode of the character may be determined depending on the travel experience of the vehicle 3 as a display target. In the display management unit 97, the processor 11 generates the message information on the basis of position information at the time of a past use of the vehicle 3, a use history of ports 7 and the like having been used, user information that is registered, and others. Note that, in a case where the display mode of the character is determined depending on the travel experience of the vehicle 3 as the display target, use histories or user registration information of the vehicle 3 related to other users other than the user as the display target can be used as the use history of the vehicle 3. That is, the processor 11 can also determine the display mode of the character to be displayed to the user as the display target depending on the travel experiences of other users having a common use purpose, such as fishing.

In this case, the comment 301 on the display screen 350 illustrated in FIG. 11 will be, for example, a comment such as "Inhabitant A, why not go to Enoshima? I've been there last week and caught sea bream."

Furthermore, the display mode of the personified character may be changed by changing clothes or items. For example, for a vehicle 3 that is often used in a place suitable for fishing such as a seashore, it is also possible to change the display mode such as making it hold a fishing rod or a landing net or wear a window breaker, a life jacket, or fishing glasses.

As described above, in the display management unit 97, the processor 11 may determine the display mode of the character depending on the travel experience of the vehicle 3, in other words, for example, travel experiences of a plurality of users having a common purpose of use regarding the target vehicle 3 to be displayed as the character. By changing the display mode depending on the travel experience of the vehicle 3, users having a common hobby such as fishing can be set as supporters of the corresponding vehicle 3, and improvement in the operation rate and cooperation in maintenance of the corresponding vehicle 3 can be expected.

For these supporters, the change in clothes of the personified vehicle 3 can be an incentive to promote use of the vehicle 3. In this case, it is also effective to gradually change the fishing rod from a bamboo rod to a luxurious fishing rod with a reel.

Note that the display mode of the character can be determined depending on various types of information prompting the user to use the vehicle 3 without being limited to the use tendency or the travel experience of the user as the display target, such as sale information of commercial facilities that can be visited by using the vehicle sharing service.

Note that the vehicle sharing system 1 according to the embodiment can be applied not only to rearrangement and charging of the vehicles 3 but also to the overall operation work performed by the operation side in the vehicle sharing service such as maintenance of the vehicles 3.

Note that, in the vehicle sharing system 1 according to the present embodiment, the management device 9 may give an incentive to a user who has responded to message information prompting cooperation in rearrangement, charging, maintenance, or others. For example, the degree of intimacy with the user may be determined on the basis of the number of times of responding to the message information or the like. Alternatively, the character may change such that a rare character becomes available, more facial expressions or clothes to put on the character may become available, the color may change, or the character may grow. Of course, without being limited to the virtual incentive on the application, a real incentive such as points may be given.

Furthermore, in the vehicle sharing system 1 according to the present embodiment, the management device 9 can also provide incentives as described above depending on the ranking of the use rate or the contribution rate of the vehicle sharing service.

Note that the vehicle sharing service according to the present embodiment can also be provided via an application programming interface (API). A communication method according to the present embodiment connects in a mutually operable manner via a network and provides a service to another computer system by execution of an application.

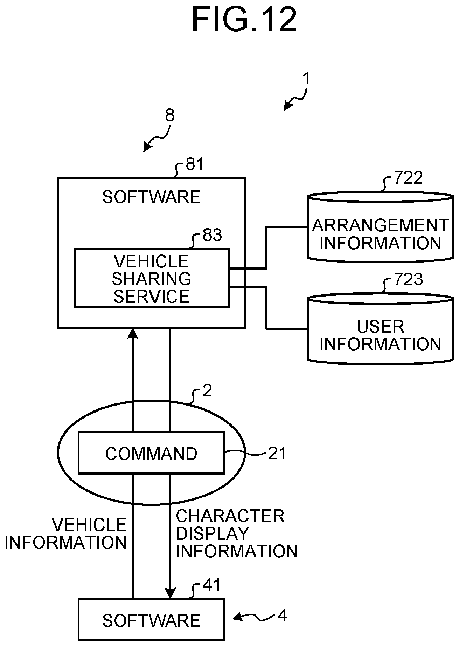

FIG. 12 is a diagram illustrating an example of a configuration of the vehicle sharing system 1 that provides a vehicle sharing service 83 via an application programming interface (API) according to the embodiment.

The vehicle sharing system 1 according to the present embodiment includes an API 2, a client system 4, and a service platform 8.

The API 2 is an interface provided by a service provider for a user of the client system 4 to use the vehicle sharing service 83. The API 2 includes a command interface 21. As described with reference to FIGS. 2 and 3, the command interface 21 is an interface of commands for receiving input of vehicle information and others and outputting character display information.

The character display information is information indicating a display mode of the character to be displayed on the user terminal 5 provided from the service platform 8 in response to input of vehicle information on the basis of arrangement information 722 from a port 7 or user information 723 subjected to use registration. That is, the character display information corresponds to the message information generated by the management device 9 described above.

The client system 4 is a system used on the user's side that obtains a display mode of a character corresponding to vehicle information related to a vehicle 3, such as the remaining battery level, the operation rate, or whether or not there is vehicle abandonment. In the client system 4, the user terminal 5 according to the above-described embodiment is implemented as a part of software 41 which is an application program executed in a system of a customer.

As illustrated in FIG. 13, the service platform 8 provides character display information to the client system 4 via the API 2. The software 81, which is an application program executed in the service platform 8, provides the client system 4 with the vehicle sharing service 83 via the API 2. The service platform 8 corresponds to the management device 9 according to the embodiment. In other words, the management device 9 according to the above-described embodiment can also be implemented as the service platform 8.

As described above, in the vehicle sharing system 1 according to the embodiment, in a case where the degree of bias is larger than a predetermined threshold value, the management device 9 and the API 2 generate message information to be displayed on a plurality of user terminals 5, the message information prompting cooperation in rearrangement of moving a vehicle that is not in use to another port, and transmit the message information to the plurality of user terminals 5. As an example, in the vehicle sharing system 1 according to the embodiment, the management device 9 personifies (presents by a character) the vehicle 3, analyzes the state of the character, the degree of intimacy with the user, and others, and performs output that stimulates the user's eagerness to cooperate.

As a result, cooperation of users with the vehicle sharing service can be promoted. That is, since it is possible to prompt voluntary cooperation of users without depending on financial incentives, it is possible to reduce the cost related to the operation work such as rearrangement to correct the bias in a case where the vehicle arrangement is biased, charging of the vehicles, and the maintenance and to increase the operation revenue. In addition, since the display mode of the character changes depending on a response to the operation work such as rearrangement, charging, and maintenance, the users can feel joy and satisfaction in responding to the operation work.

A program executed by each device of the vehicle sharing system 1 of the present embodiment is provided by being recorded in a computer-readable recording medium such as a CD-ROM, an FD, a CD-R, or a DVD as a file in an installable format or an executable format.

Moreover, a program executed by each device of the vehicle sharing system 1 of the present embodiment may be configured to be stored in a computer connected to a network such as the Internet and provided by being downloaded via the network. Furthermore, a program executed by each device of the vehicle sharing system 1 may be configured to be provided or distributed via a network such as the Internet.

Alternatively, a program executed by each device of the vehicle sharing system 1 of the present embodiment may be configured to be provided by being incorporated in advance in a ROM or the like.

According to at least one of the embodiments described above, it is possible to promote cooperation of users for the vehicle sharing service.

Although some embodiments of the present invention have been described, the embodiments have been presented as examples and are not intended to limit the scope of the invention. These embodiments can be implemented in various other forms, and various omissions, substitutions, and modifications can be made without departing from the gist of the present disclosure. These embodiments and modifications thereof are included in the scope and gist of the invention and are included in the invention described in the claims and an equivalent scope thereof.

### (Supplement)

The following techniques are disclosed by the above description of the embodiments.

### (Technique 1)

A management device that communicates with, via a network, each of a plurality of vehicles in each of which a unique character having a plurality of display modes is set, and a user terminal used by a user in a system that provides a vehicle sharing service in which the plurality of vehicles are moved among a plurality of ports by being used by the user, the management device including:
an acquisition unit that acquires position information indicating a position of each of the plurality of vehicles;
an analysis unit that analyzes a degree of bias in arrangement regarding the plurality of vehicles among the plurality of ports, based on the position information of the plurality of vehicles; and
a display management unit that determines a display mode of the character set in any of the plurality of vehicles depending on a magnitude of the degree of bias.

### (Technique 2)

The management device according to the above technique (1), wherein
the acquisition unit acquires status information indicating whether or not each of the plurality of vehicles is in use,
the analysis unit analyzes a degree of bias in arrangement regarding a vehicle that is not in use among the plurality of vehicles, among the plurality of ports, based on the position information and the status information of the plurality of vehicles, and
in a case where the degree of bias is larger than a predetermined threshold value, the display management unit generates message information for prompting cooperation in rearrangement of moving the vehicle that is not in use to another port, the message information being to be displayed on the user terminal, and transmits the message information to the user terminal.

### (Technique 3)

The management device according to the above technique (2),
wherein the display management unit generates the message information depending on a display mode of the character set in the vehicle that is not in use.

### (Technique 4)

The management device according to the above technique (2) or the above technique (3),
wherein the display management unit determines a user as a display target for whom the message information is to be displayed on the user terminal, based on a use record of each user regarding the vehicle that is not in use.

### (Technique 5)

The management device according to the above technique (4),
wherein the display management unit determines a display mode of the character depending on at least one of a use level or a use manner level of the user as the display target regarding the vehicle that is not in use.

### (Technique 6)

The management device according to the above technique (4) or the above technique (5),
wherein the display management unit determines a display mode of the character depending on a use tendency of the user as the display target regarding the vehicle that is not in use.

### (Technique 7)

The management device according to any of the above technique (4) to the above technique (6),
wherein the display management unit determines a display mode of the character depending on a travel experience of the user as the display target regarding the vehicle that is not in use.

### (Technique 8)

The management device according to any of the above technique (2) to the above technique (7),
wherein, in a case where a remaining battery level of a battery mounted on the vehicle that is not in use is smaller than a predetermined threshold value, the display management unit generates the message information prompting cooperation in recharging the battery.

### (Technique 9)

(8), The management device according to the above technique
wherein the display management unit determines a display mode of the character depending on the remaining battery level of the battery.

### (Technique 10)

The management device according to any of the above technique (2) to the above technique (9), wherein
the analysis unit analyzes whether or not there is a vehicle that is not disposed at any one of the plurality of ports among a vehicle not in use among the plurality of vehicles, based on the position information and the status information of the plurality of vehicles, and
in a case where there is the vehicle that is not disposed at any one of the plurality of ports, the display management unit generates message information prompting cooperation in rearrangement of moving the vehicle to any one of the plurality of ports.

### (Technique 11)

The management device according to any of the above technique (1) to the above technique (10), wherein
the character is personified, and
the display management unit switches a display mode of the character by changing at least one of a facial expression, an emotion, or a speech balloon of the character.

### (Technique 12)

A user terminal that communicates with, via a network, each of a plurality of vehicles in each of which a unique character having a plurality of display modes is set, and a management device, the user terminal used by a user, in a system that provides a vehicle sharing service in which the plurality of vehicles are moved among a plurality of ports by being used by the user, the user terminal including:
an acquisition unit that acquires, from the management device, character display information including a display mode of the character set in any of the plurality of vehicles, the display mode of the character determined depending on a magnitude of a degree of bias in arrangement regarding the plurality of vehicles among the plurality of ports, the degree of bias being analyzed based on position information indicating a position of each of the plurality of vehicles; and
a presentation unit that presents the character display information to the user.

### (Technique 13)

A management method of a management device that communicates with, via a network, each of a plurality of vehicles in each of which a unique character having a plurality of display modes is set, and a user terminal used by a user in a system that provides a vehicle sharing service in which the plurality of vehicles are moved among a plurality of ports by being used by the user, the management method including:
acquiring position information indicating a position of each of the plurality of vehicles;
analyzing a degree of bias in arrangement regarding the plurality of vehicles among the plurality of ports, based on the position information of the plurality of vehicles; and
determining a display mode of the character set in any of the plurality of vehicles depending on a magnitude of the degree of bias.

### (Technique 14)

A communication method of a computer system that connects in a mutually operable manner via a network and provides a service to another computer system by execution of an application, wherein
the service is a vehicle sharing service in which a plurality of vehicles are moved among a plurality of ports by being used by a user,
a unique character having a plurality of display modes is set in each of the plurality of vehicles is set,
the service is provided via an application programming interface,
the application programming interface:
   receives input of vehicle information including position information indicating a position of each of the plurality of vehicles; and
   includes a command interface that analyzes a degree of bias in arrangement regarding the plurality of vehicles among the plurality of ports, based on the position information of the plurality of vehicles, determines a display mode of the character set in any of the plurality of vehicles depending on a magnitude of the degree of bias, and outputs character display information including the determined display mode of the character.

### (Technique 15)

A program for causing a computer to execute the management method according to Technique (13).

### (Technique 16)

A program for causing a computer to execute the communication method Technique (14).

### (Technique 17)

A recording medium (computer program product) storing the program according to Technique (15) or Technique (16), the program executed by a computer.

### EXPLANATIONS OF LETTERS OR NUMERALS

- 1: VEHICLE SHARING SYSTEM
- 3: VEHICLE
- 5: USER TERMINAL
- 7: PORT
- 9: MANAGEMENT DEVICE
- 11: PROCESSOR
- 12: MEMORY
- 13: COMMUNICATION CIRCUIT
- 14: DISPLAY
- 15: TOUCH PANEL
- 16: SENSOR
- 19: BUS

## Claims

1. A management device that communicates with, via a network, each of a plurality of vehicles in each of which a unique character having a plurality of display modes is set, and a user terminal used by a user in a system that provides a vehicle sharing service in which the plurality of vehicles are moved among a plurality of ports by being used by the user, the management device comprising:
an acquisition unit that acquires position information indicating a position of each of the plurality of vehicles;
an analysis unit that analyzes a degree of bias in arrangement regarding the plurality of vehicles among the plurality of ports, based on the position information of the plurality of vehicles; and
a display management unit that determines a display mode of the character set in any of the plurality of vehicles depending on a magnitude of the degree of bias.

2. The management device according to claim 1, wherein
the acquisition unit acquires status information indicating whether or not each of the plurality of vehicles is in use,
the analysis unit analyzes a degree of bias in arrangement regarding a vehicle that is not in use among the plurality of vehicles, among the plurality of ports, based on the position information and the status information of the plurality of vehicles, and
in a case where the degree of bias is larger than a predetermined threshold value, the display management unit generates message information for prompting cooperation in rearrangement of moving the vehicle that is not in use to another port, the message information being to be displayed on the user terminal, and transmits the message information to the user terminal.

3. The management device according to claim 2,
wherein the display management unit generates the message information depending on a display mode of the character set in the vehicle that is not in use.

4. The management device according to claim 2,
wherein the display management unit determines a user as a display target for whom the message information is to be displayed on the user terminal, based on a use record of each user regarding the vehicle that is not in use.

5. The management device according to claim 4,
wherein the display management unit determines a display mode of the character depending on at least one of a use level or a use manner level of the user as the display target regarding the vehicle that is not in use.

6. The management device according to claim 4,
wherein the display management unit determines a display mode of the character depending on a use tendency of the user as the display target regarding the vehicle that is not in use.

7. The management device according to claim 4,
wherein the display management unit determines a display mode of the character depending on a travel experience of the user as the display target regarding the vehicle that is not in use.

8. The management device according to claim 2,
wherein, in a case where a remaining battery level of a battery mounted on the vehicle that is not in use is smaller than a predetermined threshold value, the display management unit generates the message information prompting cooperation in recharging the battery.

9. The management device according to claim 8,
wherein the display management unit determines a display mode of the character depending on the remaining battery level of the battery.

10. The management device according to claim 1, wherein
the character is personified, and
the display management unit switches a display mode of the character by changing at least one of a facial expression, an emotion, or a speech balloon of the character.

11. The management device according to claim 2, wherein
the analysis unit analyzes whether or not there is a vehicle that is not disposed at any one of the plurality of ports among a vehicle not in use among the plurality of vehicles, based on the position information and the status information of the plurality of vehicles, and
in a case where there is the vehicle that is not disposed at any one of the plurality of ports, the display management unit generates message information prompting cooperation in rearrangement of moving the vehicle to any one of the plurality of ports.

12. A user terminal that communicates with, via a network, each of a plurality of vehicles in each of which a unique character having a plurality of display modes is set, and a management device, the user terminal used by a user, in a system that provides a vehicle sharing service in which the plurality of vehicles are moved among a plurality of ports by being used by the user, the user terminal comprising:
an acquisition unit that acquires, from the management device, character display information including a display mode of the character set in any of the plurality of vehicles, the display mode of the character determined depending on a magnitude of a degree of bias in arrangement regarding the plurality of vehicles among the plurality of ports, the degree of bias being analyzed based on position information indicating a position of each of the plurality of vehicles; and
a presentation unit that presents the character display information to the user.

13. A management method of a management device that communicates with, via a network, each of a plurality of vehicles in each of which a unique character having a plurality of display modes is set, and a user terminal used by a user in a system that provides a vehicle sharing service in which the plurality of vehicles are moved among a plurality of ports by being used by the user, the management method comprising:
acquiring position information indicating a position of each of the plurality of vehicles;
analyzing a degree of bias in arrangement regarding the plurality of vehicles among the plurality of ports, based on the position information of the plurality of vehicles; and
determining a display mode of the character set in any of the plurality of vehicles depending on a magnitude of the degree of bias.

14. A communication method of a computer system that connects in a mutually operable manner via a network and provides a service to another computer system by execution of an application, wherein
the service is a vehicle sharing service in which a plurality of vehicles are moved among a plurality of ports by being used by a user,
a unique character having a plurality of display modes is set in each of the plurality of vehicles is set,
the service is provided via an application programming interface,
the application programming interface:
receives input of vehicle information including position information indicating a position of each of the plurality of vehicles; and
includes a command interface that analyzes a degree of bias in arrangement regarding the plurality of vehicles among the plurality of ports, based on the position information of the plurality of vehicles, determines a display mode of the character set in any of the plurality of vehicles depending on a magnitude of the degree of bias, and outputs character display information including the determined display mode of the character.
